# EUROPEAN PATENT SPECIFICATION

(11) **EP 0 808 932 B1**
(45) Date of publication and mention of the grant of the patent: **14.08.2002**
(21) Application number: 97303440.8
(22) Date of filing: 20.05.1997
(51) Int. Cl.: D06F 37/22

(54) **Washing machine**
Waschmaschine
Machine à laver

(30) Priority: 23.05.1996 KR 9617746; 30.05.1996 KR 9613840
(43) Date of publication of application: 26.11.1997
(73) Proprietor: Samsung Electronics Co., Ltd., Suwon City, Kyungki-do (KR)
(72) Inventor: Lee, Hyun-Moo, Suwon City, Kyungki-Do (KR); Lee, Geum-Chan, Yangchun-Gu, Seoul (KR)
(74) Representative: Read, Matthew Charles

(56) References cited:
- DE-U- 1 912 481
- FR-A- 1 213 067
- FR-A- 2 393 097

## Description

The present invention generally relates to a washing machine comprising a tub having a drum rotatably mounted therein for receiving a load of clothes and including counterbalance means comprising a plurality of balls arranged to move along an annular race, fixed relative to the drum and concentric therewith, during rotation of the drum, towards a counterbalancing position in response to an imbalance in a load in the drum, the race having an annular wall spaced from the drum, the wall including an orifice to enable the supply of lubricating liquid to the balls. Such a washing machine is known from EP 0806516 which is relevant to the present application under Article 54(3) EPC.

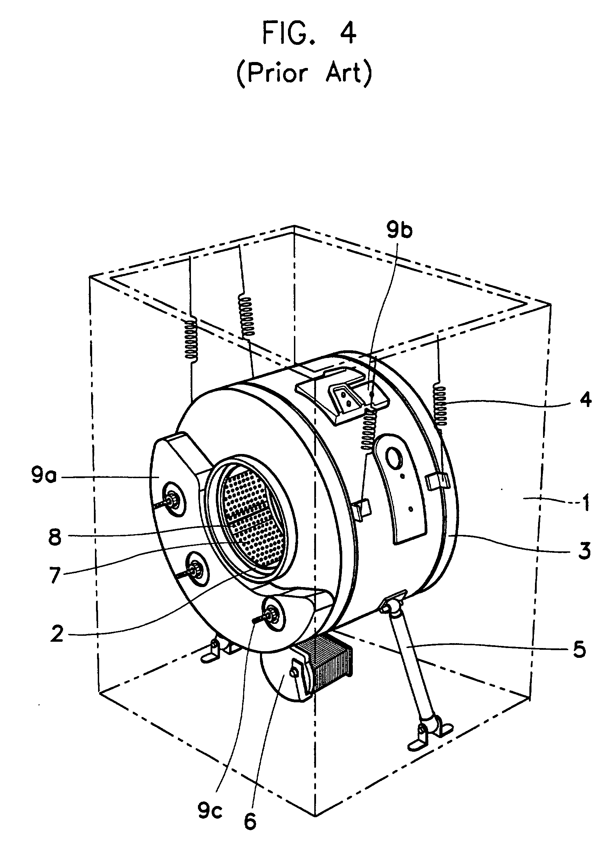

One type of conventional drum washing machines is illustrated in Figure 4 and is an appliance in which clothes are washed using suds generated as a result of rotation of its drum-shaped spin basket. Washing, rinsing and removal of water is carried out automatically according to a prescribed program. After the clothes have been washed and rinsed, centrifugal force is used to remove excess water by rotating the spin basket at high speeds. Uneven distribution of clothes in the spin basket during this spin cycle can cause abnormal vibrations and noise and so a balancing device is required for sufficient operation of the washing machine.

Referring to Figure 4, one known drum type washing machine includes a housing 1 containing a tub 3 suspended by suspension springs 4, shock absorbing arm 5 supporting the lower portion of the tub 3 and a spin basket 2 mounted for rotation within the tub 3 by an electric motor 6 mounted on the base of the housing 1. The spin basket 2 has a pulley (not illustrated) which is rotatably driven by a belt (not illustrated) connected to the driving motor 6. The spin basket 2 includes a plurality of small holes 7 uniformly formed on its surface, and a plurality of lifters 8 protrude radially inwardly towards the axis of rotation of the spin basket 2 spaced from each other by a predetermined distance. Water removed from clothes flows into the tub 3 through the small holes 7, and the lifters 8 help to raise and drop the laundry and water during the rotation of the spin basket 2.

To prevent the generation of vibrations during the washing/spin drying process, cast iron counterweights 9a,9b, each of predetermined weight, are attached to the front and upper cylindrical surface of the tub 3 by bolts 9c. The front counterweight 9a is generally in the region of 11.4kg and the upper counterweight 9b is generally in the region of 12.2kg. The counterweights 9a,9b counteract the vibrations caused by the uneven distribution of laundry in the spin basket 2 that are directly transmitted to the tub 3.

A particular disadvantage with the conventional balancing device is that the counterweights 9a,9b are heavy which precludes their easy installation and increases transportation costs.

Another type of conventional washing machine is known FR-A-1 213 067. This document discloses a plurality of counterbalance balls which are arranged to move along an annular race in response to an imbalance in a load in the drum.

It is an aim of the present invention to provide a balancing device for a drum washing machine that can overcome or substantially alleviate the above described problems and disadvantages of the conventional art.

According to the present invention, the distance between the orifice and the edge of the wall is less than the radius of the balls.

In the following description, the element referred to as the "spin basket" is an example of a "drum" as mentioned in the claims.

The meaning of the expression "washing machine" should be taken to include tumble dryers, spin dryers and the like.

A preferred embodiment of the present invention will now be described, by way of example only, with reference to the accompanying drawings, in which:
Figure 1 is a sectional view of the overall construction of a drum washing machine with a balancing device in accordance with the preferred embodiments of the present invention;

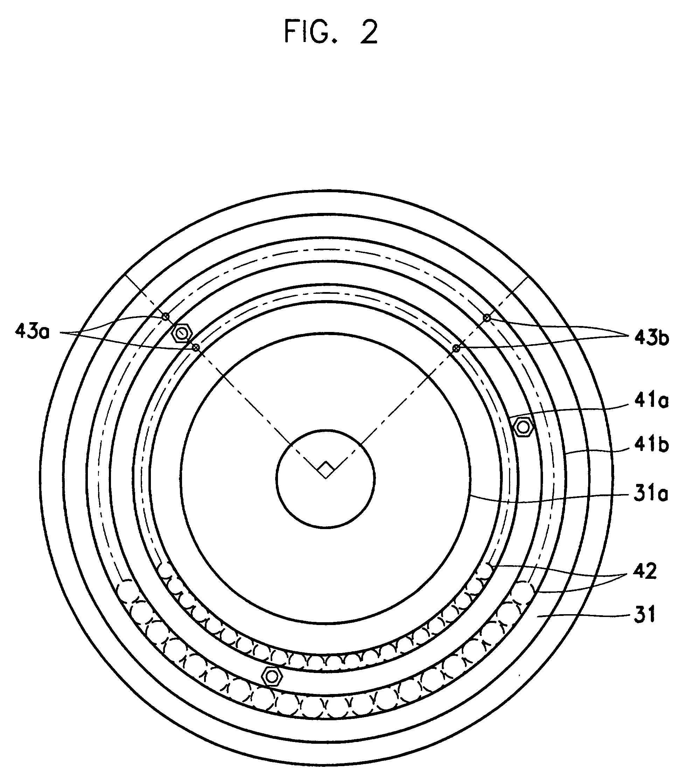

Figure 2 is a right side view of a spin basket for the drum washing machine of Figure 1;
Figure 3 is an enlarged view of a part of the balancing device of the drum washing machine in accordance with the present invention; and
Figure 4 is a perspective view of a drum washing machine with a balancing device in accordance with the prior art.

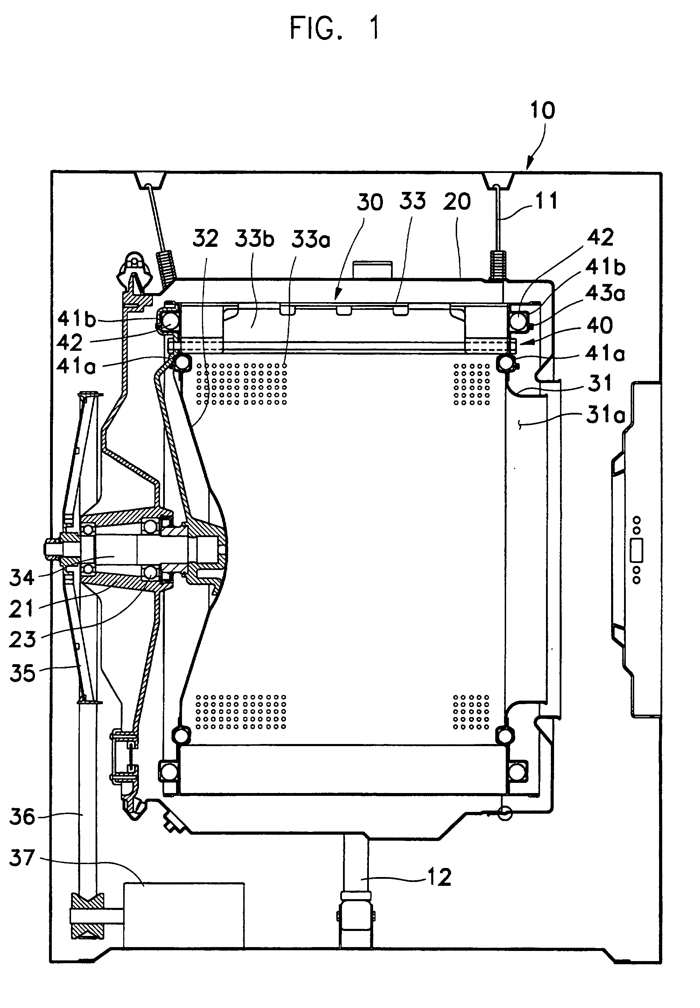

Referring now to Figure 1, the drum washing machine of the preferred embodiment includes a housing 10 having a tub 20 suspended therein having a spin basket 3 mounted for rotation within the tub 20. The tub 20 is suspended by a plurality of suspension springs 11 each having one end connected to the housing 10's inner surface and the other end joined to the outer surface of the tub 20. A pair of shock absorbing arms 12 are also provided beneath the tub 20.

The spin basket 30 consists of front and rear panels 31 and 32 separated by a cylindrically-shaped side panel 33. The front panel 31 has an opening 31a to enable laundry to be placed in or removed from the spin basket 30. The side panel 33 has a plurality of holes 33a uniformly distributed over its surface to enable water to flow freely between the tub 20 and the spin basket 30. Three evenly spaced lifters 33b are formed on the side panel 33 protruding inward towards the axis of rotation of the spin basket. Each lifter is in the form of a "V" section channel formed integrally in the side panel 33. The lifters 33b raise and drop laundry during washing.

The spin basket 30 has a shaft 34 joined to the centre of the rear panel 32 of the spin basket 30 which is rotatably supported by bearings 23 positioned in a bearing housing 47. A pulley 35 is connected to the free end of the shaft 41, and is driven by a belt 36 connected to an electric motor 37.

The spin basket 30 has a pair of balancing devices 40 provided on both the front and rear panels 31 and 32 so as to counteract the vibrations and imbalances created during rotation due to uneven distribution of laundry in the spin basket. The balancing devices comprise annular races 41a and 41b that are concentrically formed on the inner and outer sides of the front and rear panels 31 and 32, and spherical movable bodies (hereinafter "balls") 42 seated in the races 41a and 41b. As described above, the races 41a and 41b are placed on inner and outer sides of the front and rear panels 31 and 32, and the inner race 41a and the outer race 41b protrude inward and outward, respectively. Steel ball bearings serve as the spherical movable bodies 42, however rollers can alternatively be used, which could also be made of plastic.

The balls 42 are free to move in each race 41a and 41b, and oil is held in each race 41a and 41b in order to prevent abrasion caused by friction between the balls 42 and the races 41a and 41b. The races 41a and 41b each have oil supply holes 43a and air vent holes 43b. The oil supply holes 43a are used to supply oil to the races 41a and 41b, and the air vent holes 43b serve as a passage through which the air in the races 41a and 41b can escape as the oil is being supplied, thereby facilitating the oil supply process.

The oil supply holes 43a are arranged at a specified angle to the air vent holes 43b with respect to the rotational centre of the spin basket 30 to prevent the oil from being discharged through the air vent holes 43b when supplying oil to the races 41a and 41b. In the preferred embodiment, the specified angle is no more than 90°. The oil supply holes 43a and air vent holes 43b are sealed by welding after completion of the oil supply process.

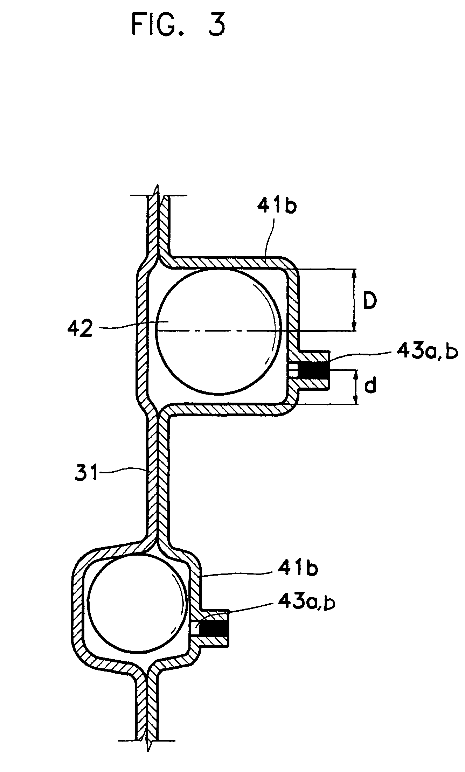

The oil supply holes 43a and air vent holes 43b, are formed at the front of the races 41a and 41b on the front panel 31 and the oil supply holes 43a and air vent holes 43b are formed at the rear of the races 41a and 41b on the rear panel 32. The position of each of the oil supply holes 43a and air vent holes 43b is shown more clearly in Figure 3. The balls 42 contact the surface of the races 41a,41b on which the holes 43a,43b are formed by centrifugal force during rotation of the spin basket so the holes 43a,43b are positioned to prevent the balls 42 from touching any burring or the like that maybe formed during the sealing of the oil supply holes 43a and air vent holes 43b.

More specifically, the oil supply holes 43a and air vent holes 43b are formed on the side wall of each of the races 41a and 41b at a distance d between the holes 43a,43b and the bottom of its respective race which is shorter than the radius of the ball 42 thereby preventing the surface of the ball 42 from touching the oil supply holes 43a and air vent holes 43b during rotation of the spin basket.

The operation of the balancing device of the preferred embodiment will be more fully described as follows.

The spin basket is rotated in a forward or reverse direction by the electric motor 37 by way of the belt 36 and the laundry inside the spin basket 30 is agitated by the lifters 33b. High speed rotation of the spin basket 30 during the spin cycle removes excess water from the laundry which then drains into the tub 20 through the holes 33a, and is discharged to outside by a drain device (not illustrated). When the spin basket is imbalanced due to an uneven distribution of laundry therein, the balls 42 move in the races 41a,41b to oppose it and thereby dynamically compensate for the imbalance and to prevent the vibration and eccentric rotation of the spin basket 30.

In the balancing device, oil is held in the races 41a and 41b to ensure smooth movement of the balls 42, and the oil supply holes 43a are arranged to make approximately a right angle with the air vent holes 43b with respect to the centre of rotation of the spin basket 30. When the oil is supplied to the races 41a and 41b through the oil supply holes 43a, the air in each race is discharged through the air vent holes 43b, thus facilitating the oil supply process. In addition, since the respective oil supply holes 43a and air vent holes 43b are formed in a position so that they do not contact the outer surface of each of the balls 42, abrasion of the balls 42 against any burrs that may be created during the sealing of the oil supply holes 43a and air vent holes 43b is prevented.

The drum washing machine described above can effectively compensate for imbalance and prevent vibration and eccentric rotation of the spin basket 30, and facilitate the oil supply to the races. In addition, the sealed oil supply holes and air vent holes do not touch the outer surface of each of the balls, thus preventing abrasion due to friction.

## Claims

1. A washing machine comprising a tub (20) having a drum (30) rotatably mounted therein for receiving a load of clothes and including counterbalance means (42) comprising a plurality of balls arranged to move along an annular race (41a,41b), fixed relative to the drum and concentric therewith, during rotation of the drum (30) towards a counterbalancing position in response to an imbalance in a load in the drum, the race (41a,41b) having an annular wall spaced from the drum (30), the wall including an orifice (43a) therein to enable the supply of lubricating liquid to the balls (42) wherein the distance between the orifice (43a) and the edge of the wall is less than the radius of the balls (42).

2. A washing machine according to claim 1 wherein a vent (43b) is provided in the wall to allow for the escape of air from the annular race (41a,41b) during supply of lubricating liquid through the orifice (43a).

3. A washing machine according to claim 2 wherein the angle between the orifice (43a) and the vent (43b) with respect to the axis of rotation of the drum (30) is no more than 90°.

## Patentansprüche

1. Waschmaschine, umfassend eine Wanne (20) mit einer Trommel (30), die darin drehbar befestigt ist, um eine Ladung Wäsche aufzunehmen, und mit einem Ausgleichsgewicht (42), umfassend eine Mehrzahl von Kugeln, die so angeordnet sind, dass sie sich entlang einer ringförmigen Bahn (41a, 41b), die relativ zur Trommel und konzentrisch damit montiert ist, während der Drehung der Trommel (30) zu einer Ausgleichsposition als Reaktion auf eine Unwucht einer Ladung in der Trommel bewegen, wobei die Bahn (41a, 41b) eine ringförmige Wand hat, die von der Trommel (30) beabstandet ist, wobei die Wand ein Loch (43a) aufweist, um die Zufuhr von Schmierflüssigkeit zu den Kugeln (42) zu ermöglichen, wobei die Entfernung zwischen dem Loch (43a) und dem Rand der Wand kleiner ist als der Radius der Kugeln (42) .

2. Waschmaschine nach Anspruch 1, wobei eine Entlüftungsöffnung (43b) in der Wand vorgesehen ist, damit während der Zufuhr von Schmierflüssigkeit durch das Loch (43a) Luft aus der ringförmigen Bahn (41a, 41b) entweichen kann.

3. Waschmaschine nach Anspruch 2, wobei der Winkel zwischen dem Loch (43a) und der Entlüftungsöffnung (43b) mit Bezug auf die Rotationsachse der Trommel (30) nicht mehr als 90° beträgt.

## Revendications

1. Un lave-linge comprenant une caisse (20) dans laquelle un tambour (30) est monté de manière rotatoire pour recevoir une charge de vêtements, et incluant des moyens formant contrepoids (42), comprenant une pluralité de billes agencées pour se déplacer le long d'un chemin de roulement annulaire (41a,41b), fixé relativement au tambour et concentrique avec celui-ci, pendant la rotation du tambour (30) vers une position de contrepoids en réponse à un déséquilibre dans une charge dans le tambour, le chemin de roulement (41a,41b) ayant une paroi annulaire écartée du tambour (30), la paroi incluant un orifice (43a) pour permettre de fournir un liquide lubrifiant aux billes (42), la distance entre l'orifice (43a) et le bord de la paroi étant inférieure au rayon des billes (42).

2. Un lave-linge selon la revendication 1, dans lequel un évent (43b) est prévu dans la paroi pour laisser échapper l'air hors du chemin de roulement annulaire (41a,41b) pendant le passage du liquide lubrifiant à travers l'orifice (43a).

3. Un lave-linge selon la revendication 2, dans lequel l'angle entre l'orifice (43a) et l'évent (43b) relativement à l'axe de rotation du tambour (30) ne dépasse pas 90°.
